# EUROPÄISCHE PATENTSCHRIFT

(11) **EP 2 778 622 B1**
(45) Veröffentlichungstag und Bekanntmachung des Hinweises auf die Patenterteilung: **28.08.2024**
(21) Anmeldenummer: 14159842.5
(22) Anmeldetag: 14.03.2014
(51) Int. Cl.: G01D 5/14

(54) **Magnetischer Positionsgeber mit zwei gegenpoligen Stabmagneten**
Magnetic position sensor with two antipodal rod magnets
Capteur de position magnétique doté de deux barres magnétiques à polarités opposées

(30) Priorität: 15.03.2013 DE 102013004411
(43) Veröffentlichungstag der Anmeldung: 17.09.2014
(73) Patentinhaber: Hirschmann Automotive GmbH, 6830 Rankweil-Brederis (AT)
(72) Erfinder: Mähr, Manfred, 6832 Röthis (AT); Rainer, Jasmin, 6800 Feldkirch (AT)
(74) Vertreter: Greif, Thomas

(56) Entgegenhaltungen:
- DE-A1- 3 809 887
- US-A- 3 129 347
- US-A- 5 365 791
- US-B1- 6 670 805
- US-B1- 7 377 333

## Beschreibung

Die Erfindung betrifft einen magnetischen Positionsgeber, aufweisend einen Magnetgeber, wobei dem Magnetgeber ein Magnetsensor zur Erfassung der Bewegung des Magnetgebers zugeordnet ist, gemäß den Merkmalen des Oberbegriffes des Patentanspruches 1.

Magnetische Positionsgeber sind grundsätzlich bekannt. An einem Objekt, dessen Bewegung, insbesondere dessen lineare oder rotatorische oder sonstige Bewegung, erfasst werden soll, ist ein Magnetgeber angeordnet. Dem Magnetgeber ist ein Magnetsensor zur Erfassung der Bewegung des Magnetgebers und somit auch zur Erfassung der Bewegung des Objektes zugeordnet. Auch die umgekehrte Anordnung, nämlich die Anordnung des Magnetsensors an dem Objekt und die feststehende Anordnung des Magnetgebers ist denkbar.

Zur Realisierung der Funktion des magnetischen Positionsgebers ist es immer erforderlich, dass der Magnetgeber im Erfassungsbereich des Magnetsensors bewegt wird. Je nach Ausgestaltung des Magnetgebers und der Erfassung der Bewegung bzw. des Bewegungsbereiches des Objektes, ist es erforderlich, den Magnetgeber entsprechend groß auszubilden, damit dieser aufgrund der Bewegung des Objektes im Wirkbereich des Magnetsensors bleibt. Dadurch verringert sich insbesondere bei der Ausgestaltung des Magnetgebers als Permanentmagnet der
Bauraum und das Gewicht, das oftmals sich nachteilig auf die Ausgestaltung des magnetischen Positionsgebers auswirkt. Außerdem lassen sich mit einem Magnetgeber vor allen Dingen lineare Bewegungen des Objektes nur sehr eingeschränkt erfassen.

Die US 6 670 805 B1 offenbart einen Ssensor zum Liefern einer Anzeige der Position eines Körpers relativ zu einem festen Ort, wobei der Körper relativ zu dem festen Ort in einer Verschiebungsrichtung verschiebbar ist, wobei der Verschiebungssensor umfasst:
erste und zweite Magnete, die entlang einer Längsachse parallel zur Verschiebungsrichtung angeordnet und in einem festen Abstand voneinander entlang der Längsachse beabstandet sind, um dazwischen einen Bereich zu definieren, der ein Magnetfeld enthält, wobei die ersten und zweiten Magnete jeweils entsprechende Polaritäten aufweisen, die auf der Längsachse angeordnet sind, wobei die Polaritäten des ersten Magneten entgegengesetzt zu den Polaritäten des zweiten Magneten angeordnet sind;
ein Magnetfeldsensorelement, das im Bereich zwischen dem ersten und dem zweiten Magneten angebracht ist; und
ein Vorspannelement, das so positioniert und ausgerichtet ist, dass es eine Vorspannung gegen mindestens einen der ersten und zweiten Magnete in Richtung des Körpers in einer Richtung parallel zur Verschiebungsrichtung bereitstellt, wobei der erste und der zweite Magnet mit einem dazwischen verlaufenden Element so zueinander positioniert sind, dass sie als Einheit als Reaktion auf eine Verschiebung des Körpers in der Verschiebungsrichtung relativ zu der festen Position gegen die durch das Vorspannelement bereitgestellte Vorspannung verschiebbar sind.

Aus der DE 38 09 887 A1 ist bekannt ein Sensor zur Messung mechanischer Bewegungsgrößen, d.h. des Weges undloder des Bewegungsverhaltens eines Körpers, durch Umwandlung der Bewegungsgröße in ein elektrisches Signal, wobei dieser einen oder mehrere in einem Gehäuse verschiebbar geführte, z.B. in einem Hohlzylinder axial verschiebbare, durch die Abstoßungskräfte gleichnamiger Magnetpole (N, S) positionierte oder in Schwebe gehaltene Permanentmagnete und eine Messeinrichtung mit einem Messelement aufweist, das ein der Verschiebung der Permanentmagnete relativ zu dem Gehäuse entsprechendes elektrisches Messsignal liefert.

Der Erfindung liegt daher die Aufgabe zugrunde, einen verbesserten magnetischen Positionsgeber bereitzustellen, der die eingangs geschilderten Nachteile vermeidet. Insbesondere soll der Messbereich vergrößert und die Messgenauigkeit verbessert werden.

Diese Aufgabe ist durch die Merkmale des Patentanspruches 1 gelöst.

Erfindungsgemäß ist vorgesehen, dass zumindest einer der Stabmagnete zumindest eine Ausnehmung aufweist und dass das Gehäuse zumindest eine Ausnehmung aufweist, wobei die zumindest eine Ausnehmung in dem Gehäuse und die zumindest eine Ausnehmung in dem Stabmagneten deckungsgleich angeordnet sind.

Die Erfindung realisiert damit einen magnetischen Positionsgeber mit genau zwei oder mehr als zwei gegenpoligen Stabmagneten zur Erfassung einer bestimmten Bewegung eines Objektes, insbesondere eines bestimmten Hubes, das heißt einer linearen oder rotatorischen Bewegung des Objektes. Durch die gegenpolige Anordnung der Stabmagneten (entweder Südpole oder Nordpole zueinander) kann der Messbereich des magnetischen Positionsgebers erweitert werden. Der Abstand zwischen den zumindest beiden gegenpoligen Stabmagneten (bzw. zwischen den mehr als zwei vorhandenen Stabmagnetpaaren) mit den zueinander gerichteten abstoßenden Polen ist genau definiert. Der definierte Abstand zwischen den abstoßenden Polen ist somit definiert, um die Messgenauigkeit des magnetischen Positionsgebers (Sensorsystem, bestehend aus Magnetgeber und Magnetsensor) bestmöglich auszulegen. Ein weiterer Vorteil ist darin zu sehen, dass der Magnetgeber (Magnetsystem) als Gebereinheit und der Magnetsensor (zum Beispiel ein Hall-Sensor) berührungslos sind. Die Anordnung der zumindest zwei Stabmagnete in einem Gehäuse hat den Vorteil, dass die Stabmagnete geschützt angeordnet sind und nicht selber an dem Objekt befestigt werden müssen. So kann das Gehäuse in vorteilhafter Weise einerseits so ausgelegt werden, dass es die zumindest zwei Stabmagnete aufnimmt und andererseits in geeigneter Weise an dem Objekt, dessen Bewegung erfasst werden soll, angeordnet werden kann. An Stelle dessen ist es auch denkbar, dass das Objekt selber das Gehäuse bildet, sodass die zumindest zwei Stabmagnete in dem Objekt selber angeordnet werden. Ist dies der Fall, wird den zumindest beiden Stabmagneten in geeigneter Weise der Magnetsensor zugeordnet, um mit ihm die Bewegung des Magnetgebers und damit des Objektes zu erfassen. In Ergänzung dazu weist der zumindest eine Stabmagnet, vorzugsweise jeder Stabmagnet, zumindest eine Ausnehmung auf. Dies hat den Vorteil, dass die Stabmagnete kodiert sind, sodass sie immer lagerichtig in dem Gehäuse angeordnet werden können. Durch diese zumindest eine Ausnehmung ist damit sichergestellt, dass die jeweiligen Stabmagnetpaare gegenpolig zueinander in dem Gehäuse angeordnet werden, das heißt immer lagerichtig mit ihren Nord- bzw. Südpol verbaut werden. In weiterer Ergänzung dazu weist das Gehäuse zumindest eine Ausnehmung auf. Mit dieser zumindest einen Ausnehmung ist es möglich, dass das Gehäuse lagerichtig in Bezug auf den Magnetsensor, zum Beispiel den Hall-Sensor, ausgerichtet, montiert und bewegt wird. Außerdem kann die Ausnehmung dazu dienen, das Gehäuse an oder in dem Objekt lagerichtig anzuordnen und zu befestigen. In weiterer Ergänzung dazu sind die zumindest eine Ausnehmung in dem Gehäuse und die zumindest eine Ausnehmung in dem Stabmagneten deckungsgleich angeordnet. Dies hat den Vorteil, dass die Stabmagnete zum Beispiel dann lagerichtig in einem Spritzgusswerkzeug angeordnet werden können, wenn das Gehäuse aus einem Kunststoffmaterial in einem Spritzgussverfahren oder in einem Gießverfahren hergestellt wird. Dadurch werden in vorteilhafter Weise die Ausnehmung in dem Gehäuse und die Ausnehmung in dem Stabmagneten deckungsgleich realisiert, um somit eine lagerichtige Ausrichtung des Gehäuses in Bezug auf den Magnetsensor zu gewährleisten. Außerdem ist es mittels der von außen erkennbaren zumindest einen Ausnehmung in dem Gehäuse möglich, dann auch die Lage der Stabmagneten innerhalb des Gehäuses zu erkennen.

Alternativ oder ergänzend dazu ist es denkbar, dass die Tiefe der Ausnehmung einmal in dem Stabmagneten und einmal in dem Gehäuse unterschiedlich oder gleich ist. In diesem Fall können die Ausnehmungen wieder deckungsgleich sein, wobei sich die Tiefe der Ausnehmung in dem Stabmagneten und die Tiefe der Ausnehmung in dem Gehäuse addieren. Auch in diesem Fall ist es denkbar, zum Beispiel durch unterschiedlich tiefe Ausnehmungen in dem Stabmagneten, die von außen über Ausnehmungen in dem Gehäuse zugänglich bzw. erkennbar sind, eine Lagekodierung vorzunehmen. Sind die Ausnehmungen der Stabmagneten von außen nicht erkennbar oder nicht zugänglich, kann durch unterschiedliche Tiefen der Ausnehmungen in dem Gehäuse eine Lagekodierung vorgenommen werden.

in Weiterbildung der Erfindung weist das Gehäuse eine Gewindebohrung auf. Über diese Gewindebohrung kann in geeigneter Weise das Gehäuse des Magnetgebers an dem Objekt, dessen Bewegung erfasst werden soll, befestigt werden. Diese Art der Befestigung ist nicht einschränkend, sodass andere Arten von Befestigungen (zum Beispiel Rastverbindungen, Klebeverbindungen oder dergleichen) denkbar sind.

In Weiterbildung der Erfindung weist das Gehäuse zumindest einen Vorsprung auf. Mittels dieses zumindest einen Vorsprunges kann das Gehäuse in einem Führungszylinder linear bewegt werden, sodass dadurch eine bessere Führung und eine radiale Verdrehsicherung gegeben ist. Insgesamt bietet ein solcher Vorsprung, der sich zumindest über einen Teilbereich der länglichen Erstreckung des Gehäuses erstreckt, eine gute Führung und eine radiale Verdrehsicherung des Gehäuses und damit des Magnetgebers im Falle der Erfassung einer linearen Bewegung des Objektes.

In diesem Fall ist in vorteilhafter Weise das Gehäuse länglich gestaltet und weist einen kreisrunden Querschnitt auf. Eine solche geometrische Form des Gehäuses hat den Vorteil, dass sie einfach herstellbar ist und in besonders kompakter Weise ebenfalls länglich gestaltete und einen kreisrunden Querschnitt aufweisenden Stabmagneten aufnehmen kann. Außerdem ist von Vorteil, dass ein solches Gehäuse mit einem kreisrunden Querschnitt und einer länglichen Gestaltung, aber auch Gehäuse mit anderen geometrischen Formen, von einer Kunststoffumspritzung einfach gebildet werden können. Hierzu werden die zumindest zwei Stabmagnete lagerichtig, insbesondere mit ihrer zumindest einen Ausnehmung, in einem Spritzgusswerkzeug eingesetzt und anschließend das Werkzeug mit Kunststoff gefüllt. Soll das Gehäuse von außen ebenfalls eine Ausnehmung aufweisen, ist das Spritzgusswerkzeug dementsprechend mit einem formgebenden Vorsprung, der nach innen in das Spritzgusswerkzeug weist, ausgerüstet. Auch die Gewindebohrung (oder alternativ ein Gewindezapfen oder andere Befestigungsvarianten) undloder der zumindest eine Vorsprung zur Führung und Verdrehsicherung wird durch die Kunststoffumspritzung gebildet.

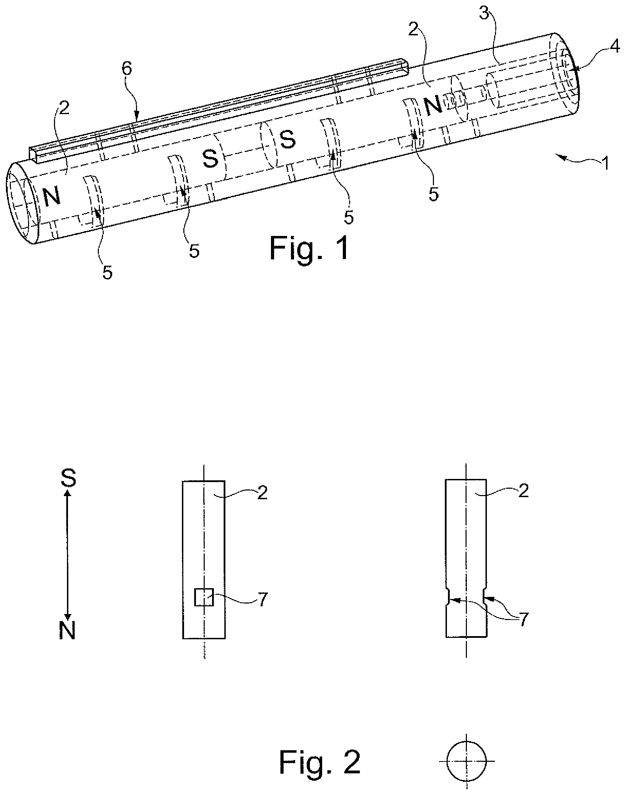

Ein Ausführungsbeispiel eines erfindungsgemäßen magnetischen Positionsgebers ist im Folgenden beschrieben und anhand der Figuren 1 bis 3 näher erläutert, wobei diese keine Einschränkung darstellen.

Figur 1 zeigt, soweit im Einzelnen dargestellt, einen Magnetgeber 1 nach der Erfindung. Der Magnetgeber 1 ist an einem Objekt, dessen Bewegung erfasst werden soll, in geeigneter Weise angeordnet und befestigt. Es ist auch denkbar, dass der Magnetgeber 1 selber Bestandteil des Objektes ist. Die Bewegung des Magnetgebers wird von einem zugeordneten Magnetsensor, zum Beispiel einem Hall-Sensor, erfasst, der in Figur 1 jedoch nicht dargestellt ist.

Der Magnetgeber 1 weist zumindest zwei Stabmagnete 2 auf, die gegenpolig in einem Gehäuse 3 angeordnet sind. Bei diesem Ausführungsbeispiel sind die beiden Südpole S der beiden Stabmagnete 2 einander zugewandt. Denkbar ist auch, dass die Nordpole N anstelle der Südpole S einander zugewandt sind. Außerdem können sich den Stabmagneten 2, die in Figur 1 gezeigt sind, in eine der beiden Richtungen oder in beide Richtungen des Verlaufes des Gehäuses 3 zumindest ein weiterer Stabmagnet anschließen. Das heißt, dass dann, wenn zum Beispiel dem bei Betrachtung der Figur 1 linken Stabmagnet 2 ein weiterer Stabmagnet zugeordnet wäre, wäre dieser mit seinem Nordpol zu dem Nordpol N des linken Stabmagnetes 2 angeordnet.

Weiterhin weist das Gehäuse 3 in Figur 1 eine Gewindebohrung 4 auf, mit dem das Gehäuse 3 an dem Objekt, dessen Bewegung erfasst werden soll, angeschraubt werden kann. Es ist auch denkbar, anstelle der Gewindebohrung 4 einen

Gewindezapfen vorzusehen. Ebenso sind andere Befestigungsmöglichkeiten, wie zum Beispiel Rasthaken am Gehäuse 3 und zugehörige Rastmittel an dem nicht dargestellten Objekt denkbar. Es ist auch denkbar, dass das Gehäuse 3 des Magnetgebers 1 kein eigenständiges Bauteil ist (wie in Figur 1 dargestellt), sondern dass das Gehäuse 3 von einem Bereich des Objektes, dessen Bewegung erfasst werden soll, gebildet wird.

Außerdem ist in Figur 1 erkennbar, dass Ausnehmungen 5 vorhanden sind. Diese Ausnehmungen 5 sind zumindest in dem Gehäuse 3 eingebracht. Außerdem weist das Gehäuse 3 einen Vorsprung 6 auf. Der Vorsprung 6 ist länglich längs verlaufend auf der Oberfläche des Gehäuses 3 vorhanden und dient einer besseren Führung in einem nicht dargestellten Führungszylinder und darüber hinaus als radiale Verdrehsicherung des Gehäuses 3 in diesem Führungszylinder. Der Vorsprung 6 ist entweder einstückig zusammen mit dem Gehäuse 3 gebildet oder ein separates Bauteil, das an dem Gehäuse 3 in geeigneter Weise befestigt wird. Vorzugsweise wird das Gehäuse 3, insbesondere mit der zumindest einen Ausnehmung 5 und dem Vorsprung 6, in einem Kunststoffspritzgussverfahren hergestellt.

Figur 2 zeigt eine schematische Darstellung der Stabmagnete 2, wobei erkennbar ist, dass diese auf ihrer Oberfläche ebenfalls eine Ausnehmung 7 aufweisen. Diese Stabmagnete 2 werden in einem üblichen Verfahren hergestellt und somit mit der Ausnehmung 7 versehen. Ein Verfahren zur Herstellung solcher Stabmagnete 2 kann ein Sinterverfahren sein. Alternativ kommen auch Spritzgussverfahren von Kunststoffmaterialien mit magnetisierbaren Partikeln in Betracht.

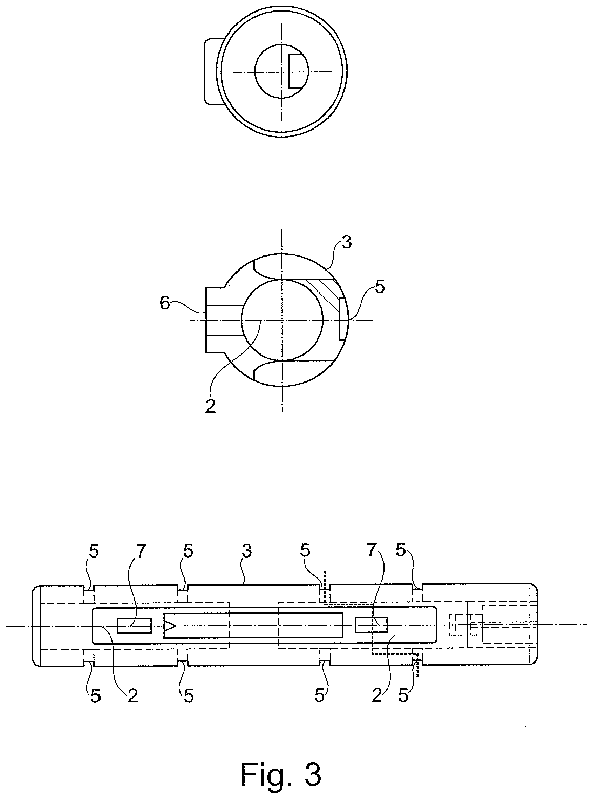

Figur 3 zeigt wiederum in der unteren Ansicht das Gehäuse 3, in dem zwei Stabmagnete 2 gegenpolig angeordnet sind. Hierbei ist in der oberen und der mittleren Darstellung ein Querschnitt durch das Gehäuse 3 dargestellt, wobei im Inneren des Gehäuses 3 der Stabmagnet 2 erkennbar ist. Auf der einen Seite des Gehäuses 3 befindet sich der längliche Vorsprung 6 ("längliche Nase") und auf der diametral gegenüberliegenden Seite die zumindest eine Ausnehmung 5.

In der unteren Darstellung der Figur 3 ist erkennbar, dass die Stabmagnete 2 jeweils eine Ausnehmung 7 aufweisen. Diese Ausnehmung kann, muss aber nicht von der Oberfläche des Gehäuses 3 zugänglich oder erkennbar sein. Außerdem ist in diesem Ausführungsbeispiel gemäß Figur 3 auf der Oberfläche des Gehäuses 3 erkennbar, dass mehrere Ausnehmungen 5 vorhanden sind, die in diesem Fall nicht deckungsgleich mit den Ausnehmungen 7 der Stabmagnete 2 sind. Das bedeutet, dass die Ausnehmungen 4 in dem Gehäuse 3 versetzt undloder verdreht zu den Ausnehmungen 7 der Stabmagnete 2 angeordnet sind. Für die Kodierung der lagerichtigen Montage der gegenpoligen Stabmagnete 2 in dem Spritzgusswerkzeug wird in vorteilhafter Weise die Tiefe der Ausnehmung 7 (Einkerbung) unterschiedlich dimensioniert. Das heißt, dass die Tiefe der linken Ausnehmung 7 des linken Stabmagnetes 2 kleiner oder größer ist als die Ausnehmung 7 in dem rechten Stabmagneten 2 (bei Betrachtung der unteren Darstellung der Figur 3). Die Ausnehmung 7 ist dabei einmal auf das Größtmaß des Stabmagneten 2 dimensioniert und einmal auf den Durchmesser des Stabmagneten 2 abzüglich der Ausnehmung 5, insbesondere der Tiefe der Ausnehmung 5.

Mit den Ausnehmungen 7, gleichen oder unterschiedlichen Querschnitts sowie gleicher oder unterschiedlicher Tiefe, in dem jeweiligen Stabmagnet 2 kann also bei Herstellung des Gehäuses 3 in einem Kunststoffspritzgussverfahren die lagerichtige Anordnung der zumindest zwei Stabmagnete 2 in dem Spritzgusswerkzeug realisiert werden. Dabei ist es denkbar, dass jeder Stabmagnet 2 nicht nur eine Ausnehmung 7, sondern auch mehr als eine Ausnehmung 7 aufweist. Der jeweiligen Ausnehmung 7 des Stabmagnetes 2 ist dabei ein entsprechender Vorsprung (eine Art Pinole) in dem Spritzgusswerkzeug, der nach innen weist in Richtung der zughörigen Ausnehmung 7, zugeordnet. Dementsprechend sind ebenfalls nach innen weisende Vorsprünge an dem Spritzgusswerkzeug vorhanden, um die Ausnehmungen 5 in dem später hergestellten Gehäuse 3 (das heißt nach dem Spritzgussvorgang) zu realisieren.

### Bezugszeichenliste

- 1.: Magnetgeber
- 2.: Stabmagnet
- 3.: Gehäuse
- 4.: Gewindebohrung
- 5.: Ausnehmung
- 6.: Vorsprung
- 7.: Ausnehmung

## Patentansprüche

1. Magnetischer Positionsgeber, aufweisend einen Magnetgeber (1), einen dem Magnetgeber (1) zugeordneten Magnetsensor zur Erfassung der Bewegung des Magnetgebers (1), sowie ein Gehäuse (3), wobei der Magnetgeber (1) zumindest zwei Stabmagnete (2) aufweist, die gegenpolig in dem Gehäuse (3) angeordnet sind, wobei die Pole benachbarter Stabmagneten (2) jeweils entgegengesetzt gerichtet sind, so dass die beiden Südpole oder Nordpole der benachbarten Stabmagnete (2) näher beieinander liegen als jeweils der Südpol eines der Stabmagneten (2) und der Nordpol des anderen Stabmagneten (2), **dadurch gekennzeichnet, dass** zumindest einer der Stabmagnete (2) zumindest eine Ausnehmung (7) aufweist und dass das Gehäuse (3) zumindest eine Ausnehmung (5) aufweist, wobei die zumindest eine Ausnehmung (5) in dem Gehäuse (3) und die zumindest eine Ausnehmung (7) in dem Stabmagneten (2) deckungsgleich angeordnet sind.

2. Magnetischer Positionsgeber nach Anspruch 1, **dadurch gekennzeichnet, dass** die Tiefe der Ausnehmung (5, 7) unterschiedlich oder gleich ist.

3. Magnetischer Positionsgeber nach einem der vorhergehenden Ansprüche, **dadurch gekennzeichnet, dass** das Gehäuse (3) eine Gewindebohrung (4) aufweist.

4. Magnetischer Positionsgeber nach einem der vorhergehenden Ansprüche, **dadurch gekennzeichnet, dass** das Gehäuse (3) zumindest einen Vorsprung (6) aufweist.

5. Magnetischer Positionsgeber nach einem der vorhergehenden Ansprüche, **dadurch gekennzeichnet, dass** das Gehäuse (3) von einer Kunststoffumspritzung gebildet ist.

6. Magnetischer Positionsgeber nach einem der vorhergehenden Ansprüche, **dadurch gekennzeichnet, dass** das Gehäuse (3) einen kreisrunden Querschnitt aufweist und länglich gestaltet ist.

## Claims

1. Magnetic position transducer, comprising a magnetic transducer (1), a magnetic sensor, which is assigned to the magnetic transducer (1), for detecting the movement of the magnetic transducer (1), and a housing (3), wherein the magnetic transducer (1) has at least two bar magnets (2), which are arranged in the housing (3) with opposite polarity, wherein the poles of adjacent bar magnets (2) are each oppositely directed, so that the two south poles or north poles of the adjacent bar magnets (2) are closer to one another than the south pole of one of the bar magnets (2) and the north pole of the other of the bar magnets (2) respectively are, **characterized in that** at least one of the bar magnets (2) has at least one recess (7) and **in that** the housing (3) has at least one recess (5), wherein the at least one recess (5) in the housing (3) and the at least one recess (7) in the bar magnet (2) are congruent.

2. Magnetic position transducer according to Claim 1, **characterized in that** the depths of the recesses (5, 7) are the same or different.

3. Magnetic position transducer according to either of the preceding claims, **characterized in that** the housing (3) has a threaded bore (4).

4. Magnetic position transducer according to one of the preceding claims, **characterized in that** the housing (3) has at least one projection (6).

5. Magnetic position transducer according to one of the preceding claims, **characterized in that** the housing (3) is formed by an injection-moulded encapsulation of plastic.

6. Magnetic position transducer according to one of the preceding claims, **characterized in that** the housing (3) has a circular cross section and is elongate.

## Revendications

1. Transmetteur de position magnétique, possédant un transmetteur magnétique (1), un capteur magnétique associé au transmetteur magnétique (1) et destiné à détecter un le mouvement du transmetteur magnétique (1), ainsi qu'un boîtier (3), le transmetteur magnétique (1) possédant au moins deux barreaux magnétiques (2), qui sont disposés à pôles opposés dans le boîtier (3), les pôles des barreaux magnétiques (2) voisins étant respectivement dirigés en sens inverse, de sorte que les deux pôles sud ou pôles nord des barreaux magnétiques (2) voisins se trouvent plus proches l'une de l'autre qu'à chaque fois le pôle sud de l'un des barreaux magnétiques (2) et le pôle nord de l'autre barreau magnétique (2), **caractérisé en ce qu'**au moins l'un des barreaux magnétiques (2) possède au moins un creux (7) et **en ce que** le boîtier (3) possède au moins un creux (5), l'au moins un creux (5) dans le boîtier (3) et l'au moins un creux (7) dans le barreau magnétique (2) étant disposés en coïncidence.

2. Transmetteur de position magnétique selon la revendication 1, **caractérisé en ce que** la profondeur des creux (5, 7) est différente ou identique.

3. Transmetteur de position magnétique selon l'une des revendications précédentes, **caractérisé en ce que** le boîtier (3) possède un trou taraudé (4).

4. Transmetteur de position magnétique selon l'une des revendications précédentes, **caractérisé en ce que** le boîtier (3) possède au moins une partie saillante (6).

5. Transmetteur de position magnétique selon l'une des revendications précédentes, **caractérisé en ce que** le boîtier (3) est formé par un surmoulage de matière plastique.

6. Transmetteur de position magnétique selon l'une des revendications précédentes, **caractérisé en ce que** le boîtier (3) présente une section transversale circulaire et est de configuration allongée.
